# EUROPEAN PATENT SPECIFICATION

(11) **EP 1 859 914 B1**
(45) Date of publication and mention of the grant of the patent: **29.05.2013**
(21) Application number: 06729055.1
(22) Date of filing: 14.03.2006
(51) Int. Cl.: B29C 45/76, B29C 45/66

(54) **MOLDING CONDITION SETTING METHOD**
VERFAHREN ZUR EINSTELLUNG DER GUSSBEDINGUNGEN
PROCEDE DE DETERMINATION DES CONDITIONS DE MOULAGE

(30) Priority: 16.03.2005 JP 2005075923
(43) Date of publication of application: 28.11.2007
(60) Divisional application: 10008768.3
(73) Proprietor: SUMITOMO HEAVY INDUSTRIES, LTD., Shinagawa-ku, Tokyo 141-8686 (JP)
(72) Inventor: KOBAYASHI, Akihisa c/o SUMITOMO HEAVY INDUSTRIES, Chiba-shi, Chiba, 263-0001 (JP); ITOH, Akira c/o SUMITOMO HEAVY INDUSTRIES, LTD., Chiba-shi, Chiba, 263-0001 (JP)
(74) Representative: Wagner, Karl H.
(86) International application number: PCT/JP2006/305021
(87) International publication number: WO 2006/098321

(56) References cited:
- DE-U1- 8 301 434
- JP-A- 04 284 222
- JP-A- 09 207 184
- JP-A- 11 115 010
- JP-A- 2001 239 563
- JP-A- 2003 231 162
- JP-A- 2004 122 579
- JP-A- 2004 249 637
- US-A- 5 149 471
- US-B1- 6 419 861

## Description

### TECHNICAL FIELD

The present invention relates to a molding condition setting method machine and, more particularly, to a molding condition setting method in a mold-clamping apparatus using a toggle mechanism.

### BACKGROUND ART

In a molding machine such as an injection molding machine, a resin melted by being heated in a heating cylinder is injected at a high pressure and filled into a cavity space of a molding apparatus. The resin filled in the cavity space is cooled and solidified to be a molded product.

The mold apparatus generally comprises a stationary mold and a movable mold, and mold-closing, mold-clamping and mold-opening are performed by moving the movable mold forward and backward to the movable mold by a mold-clamping apparatus. The mold-clamping apparatus comprises a stationary platen to which the stationary mold is attached, a movable platen to which the movable mold is attached, and a toggle mechanism which is a moving mechanism for moving the movable platen forward and backward. That is, mold-closing, mold-clamping and mold-opening are performed by driving the toggle mechanism to move the movable platen in a direction of getting close to or away from the stationary platen (for example, refer to Japanese Laid-Open Patent Application No. JP 2002-337184 A.

US 6,419,861 B discloses a method and apparatus for control of a toggle operated press to effectively set relative position between a fixed platen and a die height platen. The toggle crosshead is placed at a position required to achieve a desired press clamp force. The die height platen is advanced toward the fixed platen until minute motion of the toggle crosshead away from the fixed platen is detected whereat advance of the die height platen is ceased. In the relative position of the die height platen and fixed platen results in contact of the mold sections prior to the crosshead being placed at the required position, the crosshead is retracted a predetermined distance and then advanced to the required position. Desired die height setting is achieved without repeated iterations of a die height setting procedure.

US 5,149,471 A discloses a method for controlling clamping force on an injection molding machine by determining a toggle position at which the molds are in initial contact. That toggle position is determined as a function of a selected clamping force and a selected mold protect force and is effective to produce the desired clamping force when the toggle is fully extended.

With regard to the available prior art, attention is further drawn to DE 83 01 434 U1 and JP 11-115,010 A.

### DISCLOSURE OF THE INVENTION

### PROBLEMS TO BE SOLVED BY THE INVENTION

When a molding machine is shipped and operated at a user's site, not the reference mold but an actual molding apparatus is attached. Since the actual molding apparatus is different from the reference mold in thickness and rigidity, it is rare that the predetermined mold-clamping force generated by the reference mold is obtained by the actual mold apparatus just as it is. Accordingly, when the actual mold apparatus is attached to the mold-clamping apparatus, it is necessary to adjust the toggle mechanism so as to obtain the predetermined clamping force by the toggle mechanism.

Usually, the adjustment of such a toggle mechanism is performed by changing a position of a toggle support used as an original point of the toggle mechanism into an appropriate position. That is, a mold-clamping force generated at the thickness of the actual mold apparatus is calculated based on a relationship between the mold-clamping force obtained when attaching the reference mold and a position of the toggle support so as to determine the position of the toggle support at which the desired mold-clamping force can be obtained.

Here, when the thickness of the actual mold apparatus and the thickness of the reference mold are different, the adjustment with respect to the thickness can be performed by changing the position of the toggle support by just the difference. However, since the actual mold apparatus is different in rigidity from the reference mold, amounts of compression deformation at the time of mold-clamping are different. Since the mold-clamping force changes depending on the amount of compression deformation of a mold apparatus, when a mold apparatus having rigidity much lower than that of the reference mold is used (that is, a mold apparatus more easily deformable than the reference mold is used), merely a mold-clamping force much smaller than the desired mold-clamping force is generated at the toggle support position calculated based on the reference mold.

Additionally, since a thermal expansion due to a temperature change of a mold is added in an actual molding process, a mold-clamping force actually applied to the mold apparatus is further stronger than the mold-clamping force generated when the toggle support position calculated based on the reference mold is achieved.

Accordingly, when the actual mold apparatus is attached to the mold-clamping apparatus, it is necessary to perform an operation of starting first with the toggle support position calculated based on the reference mold, actually performing mold-clamping while changing the toggle support position bit by bit and determining the toggle support position achieving the desired mold-clamping force. Such a conventional adjustment work in which mold-clamping is actually performed while changing the toggle support position bit by bit takes a time and is a troublesome work.

Moreover, when the operation of the toggle mechanism is changed as mentioned above, since an amount of push-in of the mold is changed and a mold touch position is changed, there also is a problem in that a mold protection position that is set based on the reference mold cannot be used as it is.

### MEANS TO SOLVE THE PROBLEMS

The present invention is to provide a novel and useful molding condition setting method of an injection molding apparatus in which the above-mentioned problems are eliminated.

A more specific object of the present invention is to provide a mold condition setting method that can correct a molding condition position such as a mold protection position when adjusting a mold-clamping force.

In order to achieve the above-mentioned object, there is provided, according to the present invention, a molding condition setting method applied to a mold-clamping apparatus using a toggle mechanism, comprising: adjusting a mold-clamping force by moving a fixing position of a toggle support of the mold-clamping apparatus so as to be close to a target mold-clamping force; and changing a molding condition position in accordance with an amount of movement of the toggle support.

In the above-mentioned molding condition setting method, the adjustment of the mold-clamping force is performed based on a first mold-clamping force setting value that is acquired from a relationship between a push-in amount and a mold-clamping force corresponding to the push-in amount that has been obtained by attaching a reference mold to the mold-clamping apparatus. Additionally, the adjustment of the mold-clamping force is performed based on a difference between a mold-clamping force detection value obtained by detecting an actual mold-clamping force and said target mold-clamping force by performing mold-clamping by using said first mold-clamping force setting value. Further, a difference between said mold-clamping force detection value and said target mold-clamping force is set as a second mold-clamping force setting value, and the adjustment of the mold-clamping force is performed by using the second mold-clamping force setting value instead of said first mold-clamping force setting value.

In the above-mentioned molding condition setting method, said molding condition position may be a mold protection position. Or, said molding condition position may be a molded product pickup position of a pickup machine. Further, said molding condition position may be a core setting position.

Additionally, there is disclosed, but not according to the present invention, a control method of an injection molding machine having a mold-clamping apparatus using a toggle mechanism, comprising: adjusting a mold-clamping force by moving a fixing position of a toggle support of the mold-clamping apparatus so as to be close to a target mold-clamping force, acquiring a mold clamping force detection value by detecting an actual mold-clamping force by driving said mold-clamping apparatus; acquiring a difference between the mold-clamping force detection value and said target mold-clamping force; and acquiring the mold-clamping force detection value, when the difference exceeds a predetermined value, by performing mold-clamping by slightly moving a position of the toggle support until the difference becomes equal to or smaller than a predetermined value, and repeating the operation of acquiring the difference from said target mold-clamping force.

Other objects, features and advantages of the present invention will become more apparent from the following detailed description when read in conjunction with the accompanying drawings.

### EFFECT OF THE INVENTION

According to the present invention, molding condition positions such as a mold protection position, a molded product pickup position, a core setting position or the like can be corrected when performing an adjustment of a mold-clamping force by adjusting the toggle mechanism, and an appropriate molding operation including a protection of the mold can be achieved. Additionally, if a thickness or rigidity differs largely between the actually used mold and the reference mold, a setting value close to a clamping force setting value to be used for the actual mold can be obtained easily, and since the adjustment is started from that value, the adjusting time of the mold-clamping force can be reduced.

### BRIEF DESCRIPTION OF THE DRAWINGS

FIG. 1 is an outline diagram of a mold-clamping apparatus of an injection molding machine in which a mold protection setting method according to an embodiment of the present invention is performed.
FIG. 2 is a graph shoeing a relationship between an output torque of a mold-clamping motor and a position of a movable platen.
FIG. 3 is a flowchart of a mold protection setting process.
FIG. 4 is a flowchart of a mold-clamping force correction process A in the process shown in FIG. 3.
FIG. 5 is a flowchart of a mold-clamping force correction process B in the process shown in FIG. 3.
FIG. 6 is an illustration showing a position of a movable platen according to a mold-clamping force setting value that is set based on a reference mold.
FIG. 7 is an illustration showing positions of a toggle support and the movable platen when correcting by comparing an actual mold-clamping force setting value set based on the reference mold with an actual mold-clamping force.
FIG. 8 is an illustration showing positions of the toggle support and the movable platen when performing a correction to match an actual mold-clamping force to a desired mold-clamping force.

### BEST MODE FOR CARRYING OUT THE INVENTION

Hereafter, a description will be given in detail, with reference to the drawings, of modes of implementing the present invention. It should be noted that a mold protection setting method according to the present invention is applicable to various kinds of molding machine such as an extrude-molding apparatus, a laminator, a transfer molding apparatus, a die-cast machine, an IJ seal press machine, etc. In the present mode of implementation, a description will be given of a case in which it is applied to an injection molding machine for the sake of convenience of explanation.

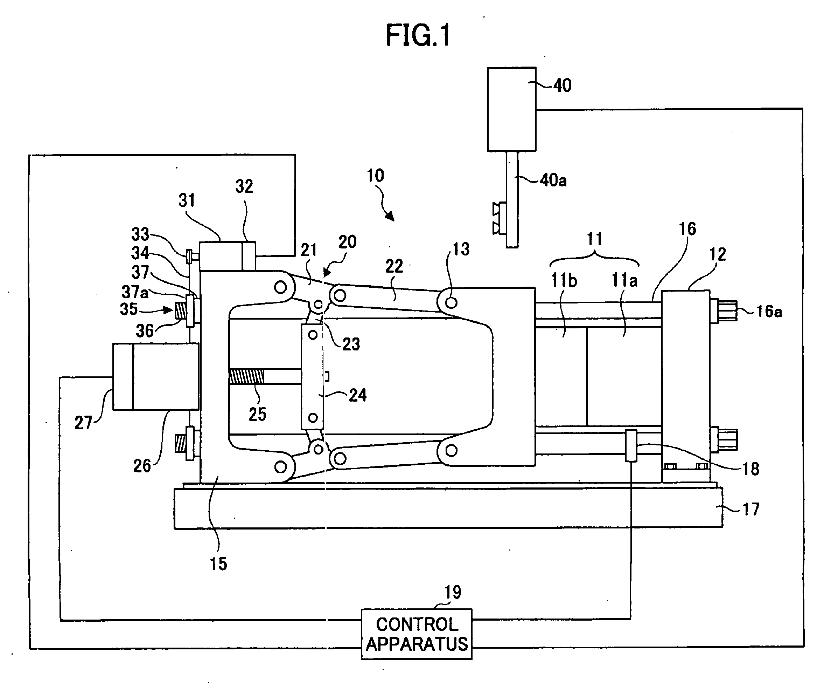

FIG. 1 is an outline diagram of a mold-clamping apparatus of an injection molding machine in which a mold protection setting method according to a first embodiment of the present invention is performed. In FIG. 1, the mold-clamping apparatus 10 of the injection molding machine comprises a frame 17, a stationary platen 12 as a stationary mold support apparatus fixed to the frame 17, and a toggle support 15 as a base plate movably arranged relative to the frame 17 with a predetermined distance from the stationary platen 12. The toggle support 15 functions as a toggle type mold-clamping apparatus support apparatus. A plurality of tie bars 16 (for example, 4 pieces) as guiding means extend between the stationary platen 12 and the toggle support 15.

A movable platen 13 is arranged opposite to the stationary platen 12, and functions as a movable mold support apparatus movably arranged forward and backward (movable in left and right directions in the figure) along the tie bars 16. A mold apparatus is comprised of a stationary mold 11a and a movable platen 11b. The stationary platen 11a is attached to a mold attaching surface of the fixed platen 12 opposite to the movable platen 13.

It should be noted that a drive apparatus for moving ejector pins (not shown in the figure) may be attached to a rear end (a left end in the figure) of the movable platen 13.

A toggle mechanism 20 as a toggle type mold-clamping apparatus is attached between the movable platen 13 and the toggle support 15. A mold-clamping motor 26 as a drive source for the mold-clamping, which operates the toggle mechanism 20, is arranged at a rear end of the toggle support 15. The mold-clamping motor 26 has a motion direction converting apparatus (not shown in the figure) comprised of a ball screw mechanism that converts a rotational movement to a reciprocal movement, and can cause the toggle mechanism to operate by causing a drive shaft 25 to move forward and backward (in left and right directions in the figure). It should be noted that the mold-clamping motor 26 preferably be a servomotor, and has a mold open and close position sensor 27 as an encoder to detect a revolution speed.

The above-mentioned toggle mechanism 20 has a crosshead 24 attached to the drive shaft 25, a second toggle lever 23 swingably attached to the crosshead 24, the first toggle lever 21 swingably attached to the toggle support 15, and a toggle arm 22 swingably attached to the movable platen 13. A link coupling is provided between the first toggle lever 21 and the second toggle lever 23 and between the first toggle lever 21 and the toggle arm 22. It should be noted that the toggle mechanism 20 is a so-called involute five articulation double-toggle mechanism, and has a structure with upper side and lower side symmetry.

The toggle mechanism 20 can be operated by driving the mold-clamping motor 26 to cause the crosshead 24 as a member to be driven to move forward and backward. In this case, when the crosshead 24 is moved forward (move in a right direction in the figure), the movable platen is moved forward and mold-closing is performed. Then, a mold-clamping force, which is a thrust force by the mold-clamping motor 26 multiplied by a toggle multiplying power, is generated, and the mold-clamping is performed with the mold-clamping force.

Moreover, in order to adjust the position of the toggle support 15 to the stationary platen 12, a mold-clamping position adjustment apparatus 35 is arranged at a rear end (a left end in the figure) of the toggle support 15. A plurality of tie bar insertion holes (not shown in the figure), for example, four holes, are formed in the toggle support 15, and left ends of the tie bars 16 in the figure are inserted into the respective tie bar insertion holes. It should be noted that the right ends of the tie bars 16 are fixed to the stationary platen 12 by fixing nuts 16a.

The tie bar 16 has a screw part 36 in which a thread is formed on the left end in the figure, and an adjust nut 37 is screwed to the screw part 36 of each of the tie bars 16. It should be noted that adjust nut 37 is attached rotatably to the rear end of the toggle support 15 and immovably in an axial direction of the tie bars 16. Additionally, a driven gear 37a is attached to an outer circumference of the adjust nut 37.

A mold-thickness motor 31 as a drive source for mold-clamping position adjustment is provided in an upper portion at the rear end of the toggle support 15. A drive gear 33 is attached to a rotational shaft of the mold-thickness motor 31. A drive linear member 34 such as a chain, a toothed belt, etc., is wound around the driven gear 37a of the adjust nut 37 and the drive gear 33. Accordingly, when the drive gear 33 is rotated by driving the mold-thickness motor 31, the adjust nut 37 screwed into the screw part 36 of each of the tie bars 16 is rotated synchronously. Thereby, the toggle support 15 can be moved forward and backward by a predetermined distance by rotating the mold-thickness motor 31 in a predetermined direction by a predetermined number of revolutions. It should be noted that the mold-thickness motor 31 preferably be a servomotor, and has a mold-clamping sensor 32 as an encoder for detecting a revolution speed.

The means for transmitting a rotation of the mold-thickness motor 31 can be any one if it can synchronously rotate the adjust nut screwed to the screw part 36 of the tie bar 16. For example, instead of the drive linear member 34, a large diameter gear engaging with all of the drive gear 33 and driven gear 37a may be rotatably provided at the rear end of the toggle support 15.

In the present embodiment, a mold-clamping force sensor 18 is provided to one of the tie bars16. The mold-clamping force sensor 18 is a sensor that detects a strain (mainly, an elongation) of the tie bar 16. A tension force is applied to the tie bar 16 in response to a mold-clamping force during mold-clamping, and the tie bar 16 is elongated slightly in proportion to the mold-clamping force. Accordingly, by detecting an amount of elongation of the tie bar 16 by the mold-clamping sensor 18, the mold-clamping force actually applied to the mold apparatus 11 can be known.

The above-mentioned mold-clamping force sensor 18, the mold open and close position sensor 27, the mold-clamping motor 26 and mold-thickness motor 31 are connected to a control apparatus 19, and detection signals output from the mold-clamping force sensor 18 and the mold open and close position sensor 27 are sent to the control apparatus 19. The control apparatus 19 controls operations of the mold-clamping motor 26 and the mold-thickness motor 31 based on the detection signals.

Here, a description will be given of an operation at the time of normal molding. When the mold-clamping motor 26 is driven in a normal direction, the ball screw shaft 25 is rotated in a normal direction, and, as shown in FIG. 1, the ball screw shaft 25 is moved forward (moved in a right direction in FIG. 1). Thereby, the crosshead 24 is moved forward, and when the toggle mechanism 20 is operated, the movable platen 13 is moved forward.

When the movable mold 11b attached to the movable platen 13 contacts the stationary mold 11a (mold-closing state), it proceeds to a mold-clamping process. In the mold-clamping process, a mold-clamping force is generated in the mold 11 by the toggle mechanism 20 by driving the mold-clamping motor 26 in the normal direction.

Then, by the screw moving forward by an injection drive part provided in an injection apparatus not shown in the figure being driven, a melted resin is filled into a cavity space formed in the mold 11. When performing mold-opening, the ball screw shaft 25 is rotated in a reverse direction by driving the mold-clamping motor 26 in a reverse direction. In association with that, the crosshead 24 is moved backward, and when the toggle mechanism 20 is operated, the movable platen 13 is moved backward.

When the mold-opening process is completed, the ejector drive part (not shown in the figure) is driven, and the ejector apparatus attached to the movable platen is operated. Thereby, the ejector pins are extruded, and the molded product in the movable mold 11b is extruded from the movable mold 11b. Additionally, a molded product pickup machine 40 as gasping means is driven simultaneously with the drive of the ejector drive part, and an arm 40a of the molded product pickup machine 40 enters between the stationary mold 11a and the movable mold 11b, and stops at a molded product stop position. Then, the molded product extruded from the movable mold 11b by the forward movement of the ejector pins is grasped and picked up by the arm 40a of the molded product pickup machine 40, and is conveyed to a conveyor apparatus as conveying means provided outside the injection molding machine.

In the meantime, the same as a mold-clamping apparatus utilizing a general toggle mechanism, a mold-clamping force generated by the toggle mechanism 20 varies with a spring constant of the entire mold-clamping apparatus 10 containing the stationary platen 12, the toggle support 15 and the tie bars 16, that is, changes with a mold-clamping rigidity as a proportionality constant. It should be noted that, in the mold-clamping apparatus 10, members other than the tie bars 16 are compressed, while a tensile load is applied to the tie bars 16. Further, other members to which a compression force is applied are comprised of a plurality of members having different rigidities, while the tie bar 16 is formed of a single member. Accordingly, it can be said that a mold-clamping force generated by the toggle mechanism 20 changes in proportion to an amount of movement of the toggle support 15 relative to the stationary platen 12 from mold-closing to completion of mold-clamping with a spring constant as a rigidity of the tie bar 16 as a proportionality constant. That is, it is said that since the members such as the stationary platen 12, the toggle support 15, etc., have a sufficiently high rigidity, the mold-clamping force generated by the mold-clamping apparatus 10 is generated by the elongation of the four tie bars 16 being elastically deformed and is proportional to an amount of elongation of the tie bars 16.

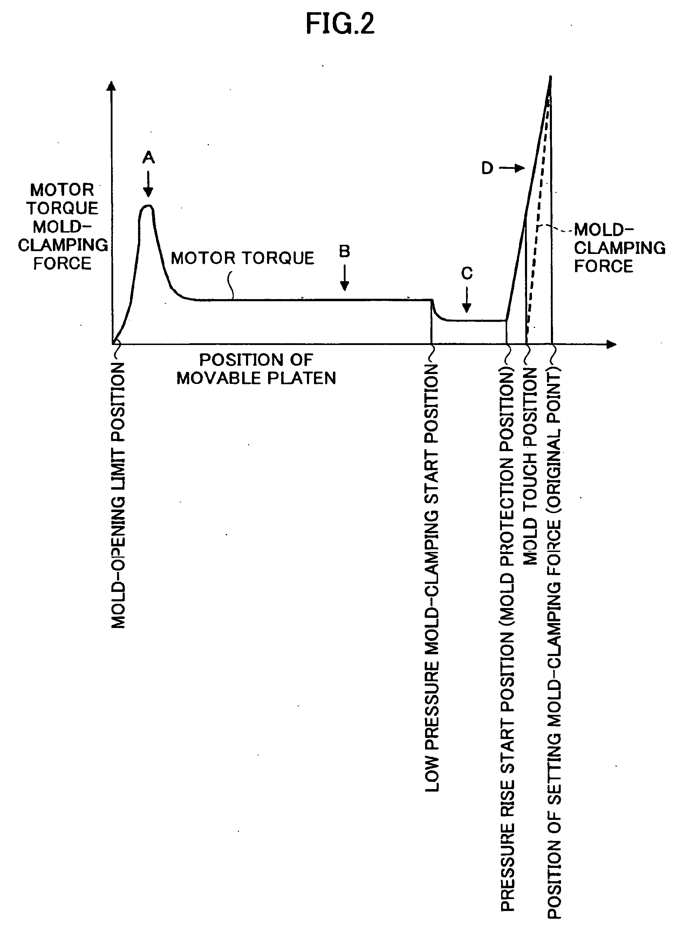

Next, a description will be given, with reference to FIG. 2, of a relationship between a motor torque generated by the mold-clamping motor 26, which drives the mold-clamping apparatus, and a position of the movable platen 13 (that is, the movable mold 11b of the mold apparatus 11). FIG. 2 is a graph showing a relationship between a motor torque of the mold-clamping motor 26 and a position of the movable platen 13.

In FIG. 2, a position at which the mold-clamping motor 26 is operated and the movable platen 13 connected to the toggle mechanism 20 is drawn closest to the toggle support 15 side is a "mold-opening limit position", and, at this position, the movable mold 11b stops in a state where it is in a state farthest from the stationary mold 11b.

When a forward movement of the movable platen is started from the "mold-opening limit position" by driving the mold-clamping motor 26, the motor torque of the mold-clamping motor 26 transits to a stable moving speed through a peak state A due to a torque rise at the start time, and is in a substantially constant state B.

At the time where the movable platen 13 moves forward in a state B where this torque is constant and the movable platen 13 is close to the stationary platen 12 to some extent, an output limitation of the mold-clamping motor 26 is started so that a torque of the mold-clamping motor 26 is controlled to be in a predetermined low torque state C. This limitation start position of the motor torque corresponds to a "low pressure mold-clamping start position". The limitation of the motor torque is a limitation provided so as to cause the movable mold 11b to move forward at a low torque and low speed at the time when the movable mold 11b gets close to the stationary mold 11a to some extent. That is, the limitation of the motor torque is a limitation provided to move the movable mold 11b with a small force of a level that the mold does not get damaged even if a foreign matter, for example, is sandwiched between the movable mold 11b and the stationary mold 11a.

A position immediately before the movable mold 11b contacts the stationary mold 11a (mold-touch) (for example, a position 0.1 mm before the mold-touch position) is a "pressure rise start position". At the "pressure rise start position", the output limitation of the mold-clamp motor 26 is cancelled, and the movable platen 13 moves forward toward the stationary platen 12 at a full speed. That is, it becomes possible that the movable platen 13 moves forward with a maximum thrust force. Accordingly, the movable platen 13 reaches the "mold-touch position" while the torque sharply rises (state D) after passing the "pressure rise start position". The "pressure rise start position" corresponds to a run-up start position to generate a mold-clamping force, and is a position to start a torque rise slightly before the "mold-touch position" since if the output limitation is cancelled at the "mold-touch position", the torque of the mold-clamping motor 26 cannot be raised rapidly. However, if a distance from the "pressure rise start position" to the "mold-touch position" is too large, the movable mold 11b is brought into contact (collide) with the stationary mold 11a in a state where the movable mold 11b is accelerated more than necessary, which may damage the mold apparatus 11. Thus, the mold apparatus is protected by providing only a small run-up distance. In this sense, the "pressure rise start position" is also referred to as a "mold protection position".

Although the movable mold 11b contacts the stationary mold 11a at the "mold-touch position" and cannot move forward, the torque continues to rise without change since the torque limitation of the mold-clamping motor 26 is cancelled. Thereby, a mold-clamping force corresponding to the torque of the mold-clamping motor 26 is applied to the mold apparatus 11. Accordingly, the mold-clamping force starts to rise sharply from the "mold-touch position", and when it reaches a previously set setting mold-clamping force, the mold-clamping motor 26 is stopped and the setting mold-clamping force is maintained. The position at which the mold-clamping force reaches the setting mold-clamping force is a "position of the setting mold-clamping force", and is set as an original point of the stationary platen 13.

Generally, the above-mentioned each position is represented by a distance (for example, millimeters) from the original point which is the "position of the setting mold-clamping position". For example, if a distance from the original point to the "mold-touch position" is 3 mm, a distance from the original point to the "mold protection position" is set to, for example, 3.1 mm.

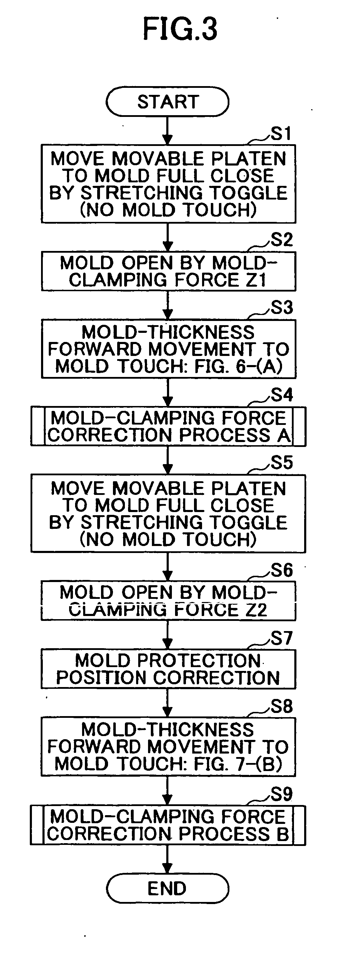

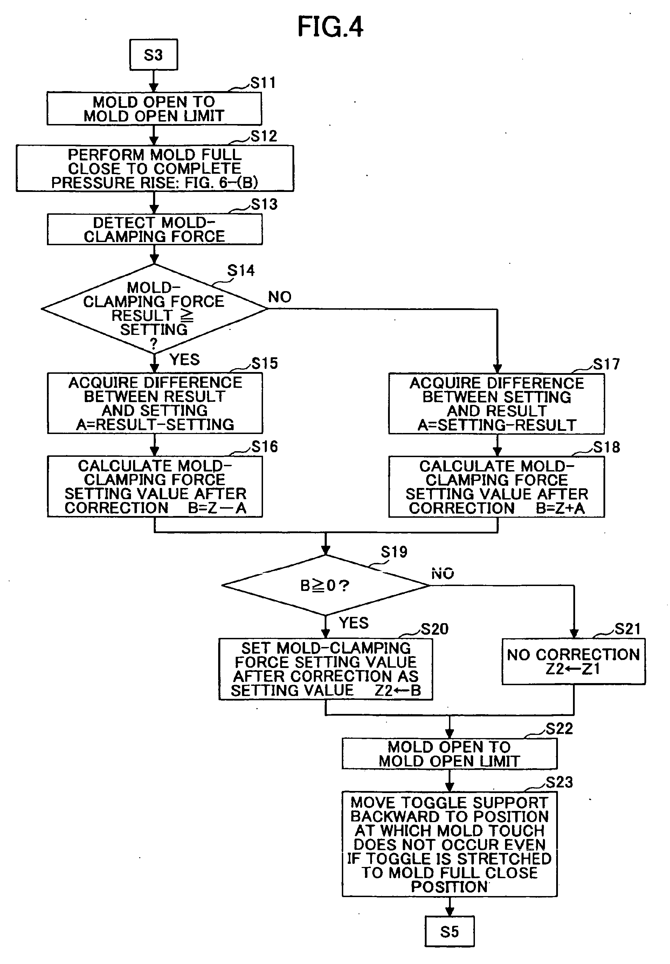

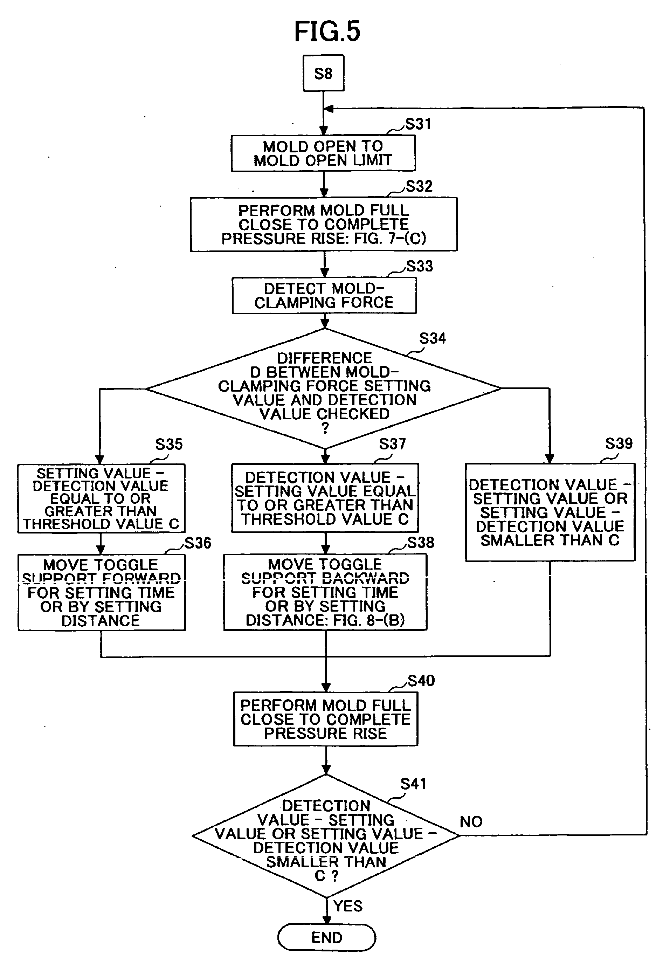

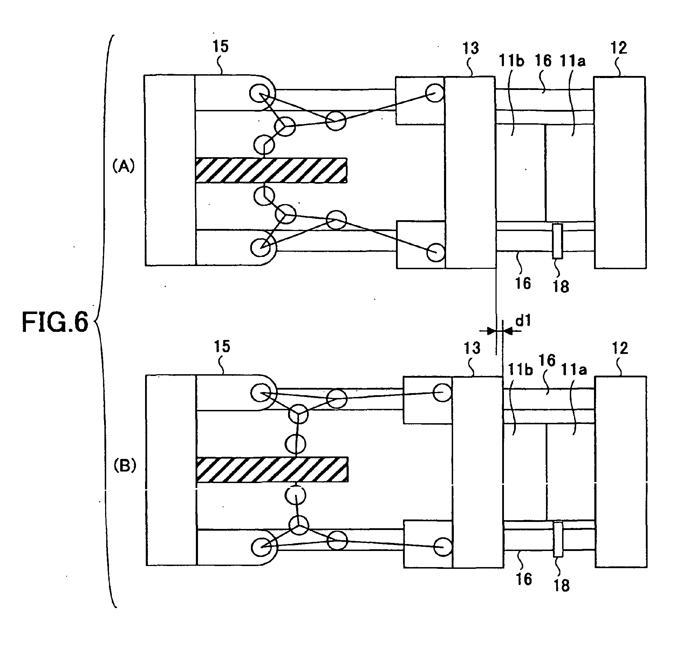

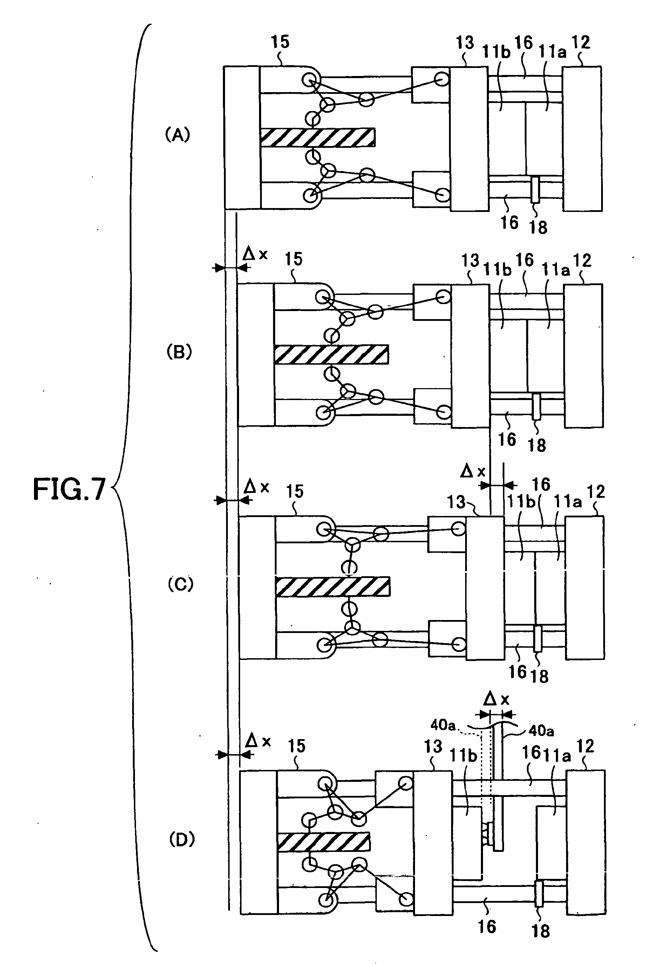

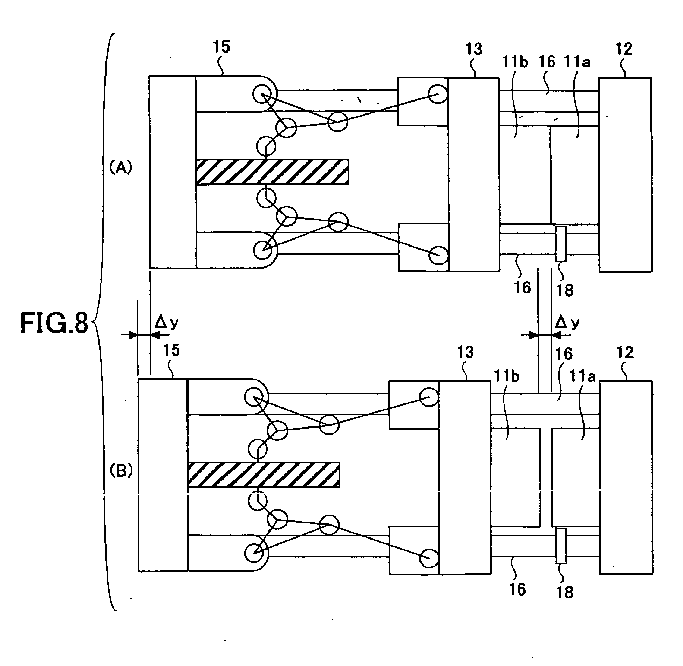

Next, a description will be given of a mold protection setting method performed in the above-mentioned mold-clamping apparatus 10. FIG. 3 is a flowchart of a mold protection setting process according to the present embodiment. FIG. 4 is a flowchart of a mold-clamping force correction process A in the process shown in FIG. 3, and FIG. 5 is a flowchart of a mold-clamping force correction process B in the process shown in FIG. 3. FIG. 6 is an illustration showing a position of the movable platen according to the mold-clamping force setting value that is set based on a reference mold. FIG. 7 is an illustration showing positions of the toggle support and the movable platen when correcting by comparing an actual mold-clamping force setting value that is set based on the reference mold with an actual mold-clamping force. FIG. 8 is an illustration showing positions of the toggle support and the movable platen when performing a correction to match an actual mold-clamping force to a desired mold-clamping force.

When the mold apparatus 11 is newly attached to the mold-clamping apparatus 10, it is necessary to adjust the mold-clamping apparatus 10 by performing the mold protection setting process shown in FIG. 3 so that a desired mold-clawing force (target mold-clamping force Z) is obtained at the position (original point) of the setting mold-clamping force. The adjustment of the mold-clamping apparatus 10 is performed by changing the position of the toggle support 15 based on the thickness and rigidity of the mold apparatus 11 attached. As mentioned above, the adjustment of the fixing position of the toggle support 15 is performed by moving the toggle support 15 forward or backward.

In the mold protection setting process shown in FIG. 3, first, the toggle of the toggle mechanism 20 is stretched by driving the mold-clamping motor 26 so as to move the movable platen 13 to the mold full-open position (step S1). At this time, the toggle support 15 has been moved to a position at which the movable mold 11b does not contact the stationary mold 11a, that is, a position at which mold-touch is not performed.

Next, mold-opening is performed by a distance d1 at which a predetermined mold-clamping force (first mold-clamping force setting value Z1: for example, 50 T) is applied when using the reference mold (step S2). That is, the movable platen 13 is moved backward by a distance, at which the mold-clamping force setting value Z1 is applied, by driving the mold-clamping motor 26. Then, while maintaining the state of the toggle mechanism 20 in the state of step S2, the toggle support 15 is moved forward by driving the mold-thickness motor 31 until the movable mold 11b contacts the stationary mold 11a, that is, until mold-touch is made (step S3). A positional relationship between the parts of the mold-clamping apparatus 10 is shown in FIG. 6-(A). The state shown in FIG. 6-(A) is a state where a mold-clamping force of 50 T can be generated when the mold apparatus 11 attached has the same thickness as the reference mold (corresponding to a case where the setting is 50 T and there is no correction).

Subsequently, the mold-clamping force correction process A shown in FIG. 4 is performed so as to correct changes in the mold-clamping force generated by changing a folding amount of the toggle due to a difference between the mold apparatus and the reference mold.

First, the movable platen 13 is moved backward to the mold-opening limitation position from the state shown in FIG. 6-(A) in step S3 by moving the mold-clamping motor 26 (step S11). Subsequently, the movable platen 13 is moved forward to the setting mold-clamping force position (original point) (mold full open) by moving the mold-clamping motor 26 so as to complete the pressure rise of the mold-clamping force. A state at this time is shown in FIG. 6-(B). In the state shown in FIG. 6-(B), it is appreciated that the movable platen 13 has been moved forward by the distance d1 from the state shown in FIG. 6-(A). When the mold apparatus 11 has the same thickness and rigidity as the reference mold, the mold-clamping force must be 50 T.

Subsequently, the control apparatus 19 detects the mold-clamping force being applied actually to the mold apparatus 11 by a detection signal supplied from the clamping force sensor 18 provided to the tie bar 16 (step S13). Then, the control apparatus 19 determines whether or not a mold-clamping force detection value (referred to as a result value) which is the actual clamping force is equal to or larger than a first setting mold-clamping force Z1 (referred to a setting value) (step S14).

If the result value is equal to or larger than the setting value, the control apparatus 19 acquires a difference A between the result value and the setting value (step S15), and calculates a mold-clamping force setting value B after correction by B = Z - A (step S16). For example, if the result value actually detected by the clamping force sensor 18 is 70 T even though the setting value is 50 T, the difference A is 70 T - 50 T = 20 T. Thus, the mold-clamping force setting value B after correction is set to 50 T - 20 T = 30 T.

On the other hand, when the result value is smaller than the setting value, the control apparatus 19 acquires the difference A between the result value and the setting value (step S17), and calculates the mold-clamping force setting value B after correction by B = Z + A (step S18). For example, if the result value actually detected by the clamping force sensor 18 is 30 T even though the setting value is 50 T, the difference A is 50 T - 30 T = 20 T. Thus, the mold-clamping force setting value B after correction is set to 50 T + 20 T = 70 T.

After the mold-clamping force after correction is calculated in step S16 or step S18, the control apparatus 19 determines whether or not the mold-clamping force setting value B after correction is equal to or larger than 0 (step S19). If the mold-clamping force setting value B after correction is equal to or larger than 0, it is determined that the desired mold-clamping force is obtained by the mold-clamping force setting value B after correction or close to it, and the mold-clamping force setting value B after correction is set as a second mold-clamping force setting value Z2 (step S20). On the other hand, if the mold-clamping force setting value B after correction is smaller than 0, it is determined that an appropriate correction cannot be made by the mold-clamping force setting value B after correction, and the mold-clamping force setting value B after correction is not used and the first mold-clamping force setting value Z1 is set as the second mold-clamping force setting value Z2 (step S21). As an example of a case where the mold-clamping force setting value B after correction is smaller than 0, it corresponds to a case where it is set as a clamping force 0T. Normally, even in a case where the mold-clamping force setting value is 0T, a touch pressure is generated due to an inertia force of the mold-clamping apparatus when molds are brought into mold-touch with each other. In this case, the mold-clamping force setting value B after correction is smaller than 0, and it is determined that an appropriate correction cannot be made by the mold-clamping force setting value B after correction and the mold-clamping force setting value B after correction is not used.

Next, the movable platen 13 is moved to the "mold-opening limit position" by moving the mold-clamping motor 26 (step 522). Thereafter, the toggle support 15 is moved backward, by driving the mold-thickness motor 31, to a position where a mold-touch is not made even if the toggle is stretched to the mold full-close position (that is, "position of the setting clamping force") (step S23).

The mold-clamping force correction process A is completed by the above-mentioned, and the mold-clamping force setting value due to a difference in rigidity of the mold apparatus 11 is corrected.

Next, the process proceeds to step S5 of FIG. 3 where the toggle is stretched by driving the mold-clamping motor 26 so as to move the platen 13 to the mold full-close position (that is, "position of the setting clamping force"). At this time, since the toggle support 15 is moved backward in step S23, the movable platen 13 is stopped before mold-touch is made.

Subsequently, the movable platen 13 is moved backward by driving the mold-clamping motor 26 based on the second mold-clamping force setting value Z2 set in step S20 or S21 (step S6). Then, the "mold protection position" is corrected with the position of the movable platen 13 at this time as the "mold touch position" (step S7). Specifically, if the "mold touch position" in step S7 is 4 mm, the "mold-protection position" is corrected to be 4 mm + 0.1 mm = 4.1 mm. As mentioned above, the mold protection setting process according to the mold protection setting method according to the present invention is achieved.

As mentioned above, the protection of the mold can be achieved appropriately by correcting the mold protection position when adjusting the mold-clamping force by adjusting the toggle mechanism.

Next, the toggle support 15 is moved forward by driving the mold-thickness motor 31 until the movable mold 11b is brought into contact with the stationary mold (step S8). A state at this time is the state shown in FIG. 7-(B). FIG. 7-(A) is an illustration showing a mold touch state by the first mold-clamping force setting value Z1 obtained based on the reference mold, and it is appreciated that the position of the toggle support 15 is changed by Δx in the state shown in FIG. 7-(B) as a result of the correction of the position of the toggle support to the second mold-clamping force setting value Z2.

For example, when a correction is made of the mold-clamping force setting value by adding 20 T to the setting value based on the reference mold so as to obtain a mold-clamping force of 50 T by the mold apparatus 11, it is necessary to increase the distance from the mold touch position to the position of the setting mold-clamping force by a distance Δx corresponding to the added mold-clamping force 20 T. In order to achieve this, the position of the toggle support 15 is set to a position moved forward by Δx. FIG. 7-(C) shows a state where the platen 13 is pushed into the "position of the setting mold-clamping force" from the state shown in FIG. 7-(B) by performing mold-clamping based on the mold-clamping setting value Z2 after correction.

Additionally, when picking up a molded product using the molded product pickup machine 40, it is necessary to make a correction also to a molded product pickup position since a setting distance between the stationary mold 11a and the movable mold 11b is changed. Also in this case, as well as the mold protection position, after performing the mold-clamping force correction according to the mold-clamping force correction process A, a correction of the molded product pickup position can be performed in step S7.

Here, the molded product pickup position is not a position of the movable platen 13 but corresponds to a position of the arm 40a of the molded product pickup machine 40 relative to the movable platen 13. That is, when the position of the toggle support 15 is moved forward by Δx by the mold-clamping force adjustment as shown in FIG. 7-(B), the movable mold 11b is also in a state where it is moved forward by Δx in the state where the toggle is folded and the movable platen 13 is moved backward. When the movable mold 11b is at this position, the arm 40a of the molded product pickup machine 40 moves toward the movable mold 11b and grasps the molded product held by the movable mold 11b. Accordingly, as shown in FIG. 7-(D), the position of the arm 40a of the molded product pickup machine 40 to grasp the molded product is moved forward by Δx.

Further, when performing a core compression molding which compresses a molded product by driving a core to form a cavity space forward and backward, it is necessary to correct a setting position of the core since the setting distance between the stationary mold 11a and the movable mold 11b is changed. Also in this case, similar to the mold protection position correction, after the mold-clamping force correction is performed according to the mold-clamping correction process A, a correction of a core setting position can be done in step S7.

The correction of a mold clamping force according to the above-mentioned process is a correction of the mold-clamping force setting value by referring to a table that records a relationship between a platen position and a mold-clamping force that is calculated based on the reference mold or previously produced based on the reference mold. Accordingly, a mold-clamping force actually generated in the mold apparatus 11 does not always accurately coincide with the target mold-clamping force which is a desired mold-clamping force to be set. Thus, in the present embodiment, the mold-clamping force correction process B shown in step S9 of FIG. 3 is performed so as to make a correction to cause the actual mold-clamping force to be closer to target mold-clamping force. FIG. 4 is a flowchart of the mold-clamping force correction process B.

In the mold-clamping force correction process B, first, the movable platen 13 is moved backward to the "mold-opening limit position" by driving the mold-clamping motor 26 (step S31). Next, the movable platen 13 is moved forward to the "position of setting mold-clamping" to perform mold full close by driving the mold-clamping motor 26 so as to complete the pressure rise of the mold-clamping force (step S32). A state at this time is shown in FIG. 7-(C).

When the pressure rise is completed, an actual mold-clamping force is detected by the output signal of the mold-clamping force sensor 18 (step S33). Then, a difference between the mold-clamping force setting value (that is, the target mold-clamping force) and the actual mold-clamping force is checked (step S34).

If it is determined that a value obtained by subtracting the detection value from the setting value (setting value - detection value) is equal to or larger than a predetermined threshold value C (C>0) (step S35), the toggle support 15 is moved forward for a predetermined setting time or by a predetermined setting distance by driving the mold-thickness motor 31 (step S36). For example, if the setting value is 50 T and the detection value of the actually detected mold-clamping force is 49 T, it is determined whether or not 50 T - 49 T = 1 T is equal to or greater than the threshold value C. For example, if the threshold value C is set to 0.2 T, it is determined that the (setting value - detection value) = 1 T is greater than the threshold value C = 0.2 T and the mold-clamping force is lacking, and the toggle support 15 is moved forward in step S36 for a predetermined setting time (for example, 1 second) or by a predetermined setting distance (for example, 0.1 mm). At this time, the toggle support 15 is moved in a state where the mold apparatus 11 is open by moving the movable platen 13 backward. That is, by moving the toggle support 15 forward bit by bit, the mold-clamping force is increased little by little so as to cause the (setting value - detection value) to be smaller than the threshold value C.

Additionally, if it is determined that a value obtained by subtracting the setting value from the detection value (detection value - setting value) is equal to or larger than a predetermined threshold value C (C>0) (step S37), the toggle support 15 is moved backward for a predetermined setting time or by a predetermined setting distance by driving the mold-thickness motor 31 (step S38). For example, if the setting value is 50 T and the detection value of the actually detected mold-clamping force is 51 T, it is determined whether or not 51 T - 50 T = 1 T is equal to or greater than the threshold value C. For example, if the threshold value C is set to 0.2 T, it is determined that (detection value - setting value) = 1 T is greater than the threshold value C = 0.2 T and the mold-clamping force is too large, and the toggle support 15 is moved backward in step S38 for a predetermined setting time (for example, 1 second) or by a predetermined setting distance Δy (for example, 0.1 mm). The state at this time is shown in FIG. 8-(B). At this time, the toggle support 15 is moved in a state where the mold apparatus 11 is open by moving the movable platen 13 backward. That is, by moving the toggle support 15 backward bit by bit, the mold-clamping force is decreased little by little so as to cause the (detection value - setting value) to be smaller than the threshold value C.

On the other hand, if it is determined that the value obtained by subtracting the setting value from the detection value (detection value - setting value) or the value obtained by subtracting the detection value from the setting value (setting value - detection value) is equal to or larger than the predetermined threshold value C (C>0) (step S39), the actual clamping-force is a value sufficiently close to the setting value. Accordingly, it is determined that correction of the mold-clamping force is needed any more, and a movement of the toggle support 15 is not performed.

After step S36 or step S38 or step S39, mold full close is performed by moving the movable platen 13 forward to the "position of setting mold-clamping" by driving the mold-clamping motor 26 so as to complete the pressure rise of the mold-clamping force (step S41). In the state where the pressure rise is completed, it is determined whether or not the (setting value - detection value) or the (detection value - setting value) is smaller than the predetermined threshold value C. If the (setting value - detection value) or the (detection value - setting value) is smaller than the predetermined threshold value C, the process is ended. On the other hand, if the (setting value - detection value) or the (detection value - setting value) is equal to or larger than the predetermined threshold value C, it returns to step S31 and the process of S31 to S41 is repeated. When performing the mold protection position correction in the process of mold-clamping force correction process B, it may be performed after the process of step S36 or step S38 is ended. Further, the correction of the molded product pickup position and the correction of the core setting position can be performed, similar to the mold protection position correction, after the process of step S36 or step S38 is ended.

As mentioned above, by correcting also the mold protection position when adjusting the mold-clamping force by adjusting the toggle mechanism, protection of the mold can be achieved appropriately. Further, with respect to the molded product pickup position, the core setting position, etc., an appropriate molding condition can be set by performing a correction corresponding to the mold-clamping force correction value. Additionally, even if thicknesses or rigidities differ greatly between an actually used mold and the reference mold, a setting value close to the mold-clamping setting value to be used for the actual mold can be rapidly and easily obtained, and since the adjustment is started from that value, the adjustment time of the mold-clamping force can be reduced.

The present invention is not limited to the specifically disclosed embodiments, and variations and modifications may be made without departing from the scope of the present invention as defined by the appended claims.

### INDUSTRIAL APPLICABILITY

The present invention is applicable to a mold-clamping apparatus using a toggle mechanism and an injection molding machine using such a mold-clamping apparatus.

## Claims

1. A molding condition setting method applied to a mold-clamping apparatus (10) using a toggle mechanism (20), comprising:
adjusting a mold-clamping force by moving a fixing position of a toggle support (15) of the mold-clamping apparatus (10) so as to be close to a target mold-clamping force; and
changing a molding condition position in accordance with an amount of movement of the toggle support (15),
wherein the adjustment of the mold-clamping force is performed based on a first mold-clamping force setting value (Z1) that is acquired from a relationship between a push-in amount of a mold and a mold-clamping force corresponding to the push-in amount that has been obtained by attaching a reference mold to said mold-clamping apparatus (10),
wherein the adjustment of the mold-clamping force is performed based on a difference between a mold-clamping force detection value obtained by detecting an actual mold-clamping force and said target mold-clamping force by performing mold-clamping by using said first mold-clamping force setting value (Z1),
wherein a difference between said mold-clamping force detection value and said target mold-clamping force is set as a second mold-clamping force setting value (Z2), and the adjustment of the mold-clamping force is performed by using the second mold-clamping force setting value (Z2) instead of said first mold-clamping force setting value (Z1).

2. The molding condition setting method as claimed in claim 1, wherein said molding condition position is a mold protection position.

3. The molding condition setting method as claimed in claim 1, wherein said molding condition position is a molded product pickup position of a pickup machine (40).

4. The molding condition setting method as claimed in claim 1, wherein said molding condition position is a core setting position when performing a core compression molding which compresses a molded product by driving a core to form a cavity space forward and backward.

## Patentansprüche

1. Formbedingungseinstellungsverfahren, das auf eine Formklemm- bzw. Formschließvorrichtung (10) angewendet wird, die einen Kniehebel- bzw. Umschaltermechanismus (20) verwendet, das Folgendes aufweist:
Anpassen der Formklemm- bzw. Formschließkraft durch Bewegen einer Befestigungsposition einer Umschalterhalterung (15) der Formschließvorrichtung (10), um dicht an einer Zielformschließkraft zu sein; und
Verändern einer Formbedingungsposition in Übereinstimmung mit einem Bewegungsbetrag der Umschalterhalterung (15),
wobei die Anpassung der Formschließkraft basierend auf einem ersten Formschließkrafteinstellungswert (Z1) ausgeführt wird, der aus einer Beziehung zwischen einem Einschubbetrag einer Form und einer Formschließkraft entsprechend einem Einschubbetrag, der durch Anbringen einer Referenzform an der Formschließvorrichtung (10) erhalten wurde, erlangt wird,
wobei die Anpassung der Formschließkraft basierend auf einem Unterschied zwischen einem Formschließkraftdetektionswert, der durch Detektieren einer tatsächlichen Formschließkraft erhalten wird, und einer Zielformschließkraft, durch Ausführen des Formschließens durch Verwenden des ersten Formschließkrafteinstellwerts (Z1) ausgeführt wird,
wobei ein Unterschied zwischen dem Formschließkraftdetektionswert und der Zielformschließkraft als ein zweiter Formschließkrafteinstellungswert (Z2) eingestellt wird, und die Anpassung der Formschließkraft durch Verwenden des zweiten Formschließkrafteinstellungswerts (Z2) anstelle des ersten Formschließkrafteinstellungswerts (Z1) ausgeführt wird.

2. Formbedingungseinstellungsverfahren gemäß Anspruch 1, wobei die Formbedingungsposition eine Formschutzposition ist.

3. Formbedingungseinstellungsverfahren gemäß Anspruch 1, wobei die Formbedingungsposition eine Formproduktaufnahmeposition einer Aufnahmemaschine (40) ist.

4. Formbedingungseinstellungsverfahren gemäß Anspruch 1, wobei die Formbedingungsposition eine Kerneinstellungsposition ist, wenn ein Kernkomprimierungsverfahren ausgeführt wird, das ein Formprodukt durch Antreiben eines Kerns komprimiert, um einen Hohlraum vorwärts und rückwärts zu bilden.

## Revendications

1. Procédé de réglage de conditions de moulage, appliqué à un dispositif de serrage de moule (10) utilisant un mécanisme à genouillère (20), comprenant les étapes suivantes :
ajuster une force de serrage de moule en déplaçant une position d'immobilisation d'un support de genouillère (15) du dispositif de serrage de moule (10) de façon à s'approcher d'une force de serrage de moule cible ; et
changer une position de conditions de moulage conformément à une quantité de mouvement du support de genouillère (15),
dans lequel l'ajustement de la force de serrage de moule est réalisé sur la base d'une première valeur de réglage de force de serrage de moule (Z1) qui est obtenue à partir d'une relation entre une quantité de repousse d'un moule et une force de serrage de moule correspondant à la quantité de repousse qui a été obtenue en fixant un moule de référence au dispositif de serrage de moule (10),
dans lequel l'ajustement de la force de serrage de moule est réalisé sur la base d'une différence entre une valeur détectée de force de serrage de moule obtenue en détectant une force de serrage de moule réelle et la force de serrage de moule cible en réalisant un serrage de moule utilisant la première valeur de réglage de force de serrage de moule (Z1),
dans lequel la différence entre la valeur détectée de force de serrage de moule et la force de serrage de moule cible est définie comme deuxième valeur de réglage de force de serrage de moule (Z2), et l'ajustement de la force de serrage de moule est réalisé en utilisant la deuxième valeur de réglage de force de serrage de moule (Z2) au lieu de la première valeur de réglage de force de serrage de moule (Z1).

2. Procédé de réglage de conditions de moulage selon la revendication 1, dans lequel la position de conditions de moulage est une position de protection de moule.

3. Procédé de réglage de conditions de moulage selon la revendication 1, dans lequel la position de conditions de moulage est une position de ramassage de produit moulé d'une machine de ramassage (40).

4. Procédé de réglage de conditions de moulage selon la revendication 1, dans lequel la position de conditions de moulage est une position de réglage de noyau lors de la réalisation d'un moulage à compression de noyau qui comprime un produit moulé en entraînant un noyau pour former un espace de cavité en avant et en arrière.
